# EUROPEAN PATENT APPLICATION

(11) **EP 2 418 646 A1**
(43) Date of publication of application: **15.02.2012**
(21) Application number: 10008435.9
(22) Date of filing: 12.08.2010
(51) Int. Cl.: G11B 20/18, G06F 11/00, G06F 11/07, G11B 19/06, G11B 27/36, G11B 19/04

(54) **Diagnosis system for removable media drives**

(71) Applicant: Harman Becker Automotive Systems GmbH, 76307 Karlsbad (DE)
(72) Inventor: Fuchs, Gerrit, 78048 Villingen-Schwenningen (DE); Jandreijevic, Krasnodar, 78532 Tuttlingen (DE); Medrano, Juan, 79115 Freiburg im Breisgau (DE)
(74) Representative: Bertsch, Florian Oliver

(57) **Abstract**

The invention relates to diagnosis system for a removable media drive (100), the system comprising:
- a monitoring unit (111) collecting information about an access to the media drive (100) and an access to a removable media contained in the media drive,
- a storage unit (120) containing a threshold table with at least one threshold value for the access to the media drive, and
- a processing unit (130) configured to compare the collected information of the monitoring unit (111) to said at least one threshold value contained in the threshold table and configured to determine a diagnosis information for the removable media drive in accordance with said comparison.

## Description

This invention relates to a diagnosis system for a removable media drive and to a method for generating the diagnosis information for the removable media drive.

### Related Art

SMART (Self Monitoring Analysis and Reporting Technology) for hard disc drives is an established industrial standard for drives of a hard disc in order to estimate the remaining hard disc lifetime. However, at the moment the lifetime of an optical drive which includes electronics, mechanics, and key components, such as the laser diode and the inserted media, is unknown, as no historical data is available. It is not possible to estimate the drive wear and remaining lifetime for the drive of a removable media.

Accordingly, a need exists to be able to provide reliable information about the drive wear and the remaining lifetime of the media drive.

### Summary

This need is met by the features of the independent claims. In the dependent claims preferred embodiments of the invention are described.

According to a first aspect of the invention, a diagnosis system for the removable media drive is provided, the system comprising a monitoring unit collecting information about an access to the media drive and an access to the removable media contained in the media drive. Furthermore, a storage unit is provided containing a threshold table with at least a threshold value for the access to the media drive. Furthermore, a processing unit is provided configured to compare the collected information of the monitoring unit to said at least one threshold value contained in the threshold table and configured to determine a diagnosis information for the removable media drive in accordance with said comparison. With the claimed diagnosis system it is possible to estimate the drive wear and the remaining lifetime independent of the used media. The monitoring unit logs all accesses to the media and to the media drive, the information being stored for the media sessions and drive sessions. A media session is associated with a media serial number and starts with loading a media into the drive and ends with ejecting it. A drive session is associated with a drive serial number and ends with the renewal of the drive itself after a drive exchange.

According to a preferred embodiment of the invention, the monitoring unit is configured to collect media session related information in a media table, the media session starting with the insertion of the removable media into the media drive, the media session ending with the ejection of the removable media from the media drive. Furthermore, the monitoring unit is configured to collect drive session related information in a drive session table, the drive session related information being collected over the lifetime of the drive in the system. Preferably, the media session related information stored in the media table is stored separately and independently from the drive session related information that is stored in a drive session table. With the separate storing of media session related information and drive session related information it is possible to separate errors of a single unreadable media from lifetime parameters of the removable media drive. Thus, if the drive is not able to read an inserted storage medium, the diagnosis system can determine whether this is due to the overall age and wear of the drive or whether it is due to the inserted media itself.

Preferably, the monitoring unit generates a media table for each removable media inserted into the media drive. This allows to collect history information for every removable media inserted into the drive. The generation of a media table for each media session. Furthermore, this allows to obtain reliable information about the drive fitness and the media wear due to separate storage of history information for each removable media inserted into the drive.

Preferably, the monitoring unit collects the media serial number and stores the media serial number together with the media table of the corresponding media session.

According to a preferred embodiment, the monitoring unit first collects the media session related information in a media session table, the processing unit being configured to transfer the data contained in the media session table to the media table of said session when the removable media is ejected from the media drive. Furthermore, the processing unit clears the media session table when it is detected that a new media is inserted into the removable media drive. In another embodiment the media session table is cleared directly after the transfer of the data to the corresponding media table. By way of example, the media session table may be provided in the RAM of the storage unit, the content of which will be cleared when a new media is inserted into the drive, whereas the media tables for the different media sessions may be stored in a persistent memory part of the storage unit. In this persistent part of the memory the information is kept at least over the lifetime of the media drive to be able to determine remaining lifetime or the drive wear after a shutdown and a new-start of the computer in which the removable media drive is installed.

Preferably, the processing unit determines the diagnosis information by comparing data of the different media tables and the drive session table to the threshold values contained in the threshold table. This means that based on the drive session table, the media tables and the drive threshold table, the remaining lifetime of the drive can be estimated.

The processing unit preferably determines a drive fitness. The drive fitness does not only depend on the mechanical and physical entries of the media tables and drive session tables, but also depends on the changes detected in the media tables that were generated for each removable media inserted into the media drive. By way of example the playability of different media may change. At the beginning of the lifetime of a media drive the driver may be able to play all media without problems, but it may happen that due to the aging the number of media which can be played without problems diminishes. Thus, the media tables provide the information about changes of the playability or readability of the media drive. By way of example the media tables help to detect that a CD-R always caused problems, whereas other CDs, such as CD-DA could also be played out without problems. However, if this situation changes over time that less and less media can be played out without problems, the probability is high that the media drive already has a certain age. Thus, using the different media tables it is possible to determine the evolution of the playability/readability of different media over time.

Furthermore, the diagnosis system may comprise a drive handler that is detecting an eject event of the removable media and that transmits the eject event to the processing unit. This information allows the processing unit to transfer the data collected in a media session table to the media table of said session and when a new removable media is inserted to clear the data in the media session table.

The invention furthermore relates to a method for generating the diagnosis information for removable media drive. The method comprises the steps of collecting information about an access to the media drive and an access to the removable media contained in the media drive. Furthermore, a threshold table is provided containing at least one threshold value for the access to the media drive. In an another step of the method the collected information is compared to said at least one threshold value contained in the threshold table and the diagnosis information for the removable media drive is determined depending on the comparison.

The storing of the collected information in the media session table and the different media tables is carried out as described above by first collecting the media session related information in a media session table and then transfering the collected information to a media table when the removable media is ejected from the media drive. Furthermore, the media session table is cleared at the latest when it is detected that a new media is inserted into the removable media drive. In another embodiment it is also possible to already clear the media session table when it is detected that the media is ejected from the media drive. The diagnosis information may be determined by using the data of the different media tables, from the drive session table and the threshold table.

Preferably, the collection of the information comprises at least one of the following steps: counting the number of starts or stops of a media reader used in the media drive for reading the removable media, counting the number of working hours, determining the number of drive resets, determining the number of read errors, determining the drive temperature, determining the number of media insertions into the removable media drive, etc.

### Brief Description of the Drawings

The invention will be described in further detail with reference to the accompanying drawings, in which
Fig. 1 is a schematic overview over a diagnosis system for a removable media drive,
Fig. 2 is a flow-chart showing the steps for determining the remaining lifetime of the media drive,
Fig. 3 shows an example of a media session table or drive session table,
Fig. 4 shows examples of media tables,
Fig. 5 shows an example of a drive threshold table, and
Fig. 6 shows an example of a drive handler table.

### Detailed Description of the Drawings

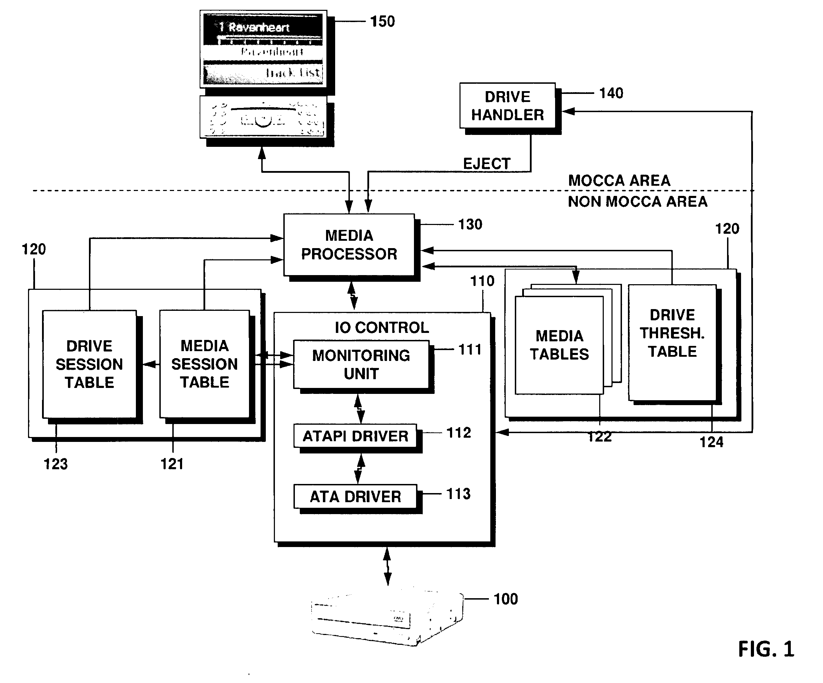

In Fig. 1a schematic view of a system is shown with which the remaining lifetime of a removable media drive can be estimated. The system shown in Fig. 1 may be installed in any hardware unit where a removable media drive 100, such as a CD drive or a DVD drive, is installed. As shown in Fig. 1 the drive 100 is connected to an input/output control unit 110 of the removable media drive, the input/output control unit 110 comprising a monitoring unit 111 collecting the information about an access to the media drive or an access to the removable media contained in the media drive. The media drive 100 comprises electronic components, mechanical components, and a laser diode to read the inserted media, such as a CD or a DVD. The monitoring unit logs all accesses to the media and the media drive. The monitoring unit is shown as a separate unit, however, it should be understood that the monitoring unit 111 may be incorporated into other components, such as the ATAPI driver 112 or the ATA driver 113, these drivers being provided for a communication to the hardware, here the drive 100. The monitoring unit may be incorporated as hardware or software or as a combination of hardware and software. In one embodiment the monitoring unit may be incorporated by extending the protocol of the media low level driver interface block (e.g. ATAPI, USB, File I/O) with lifetime and history counters for all wearing parts of the media or drive and link them to the serial number of the inserted media or drive.

The system furthermore comprises a storage unit 120 where different tables are stored that are used by a processing unit 130 to calculate the drive wear and the remaining lifetime of the drive. The monitoring unit 111 separately collects information for every media session and every media drive session. The media session starts with loading the media into the drive 100 and ends after ejecting it. Each media session is associated with a media serial number. A drive session is associated with a drive serial number which will be renewed after a drive exchange. The monitoring unit collects the information about an access to the media and to the media drive and stores it in tables provided in the storage unit 120. For each inserted media the information about a media session is collected in a media session table 121.

The mocca and non-mocca area delimits the drive plane from the user plane.

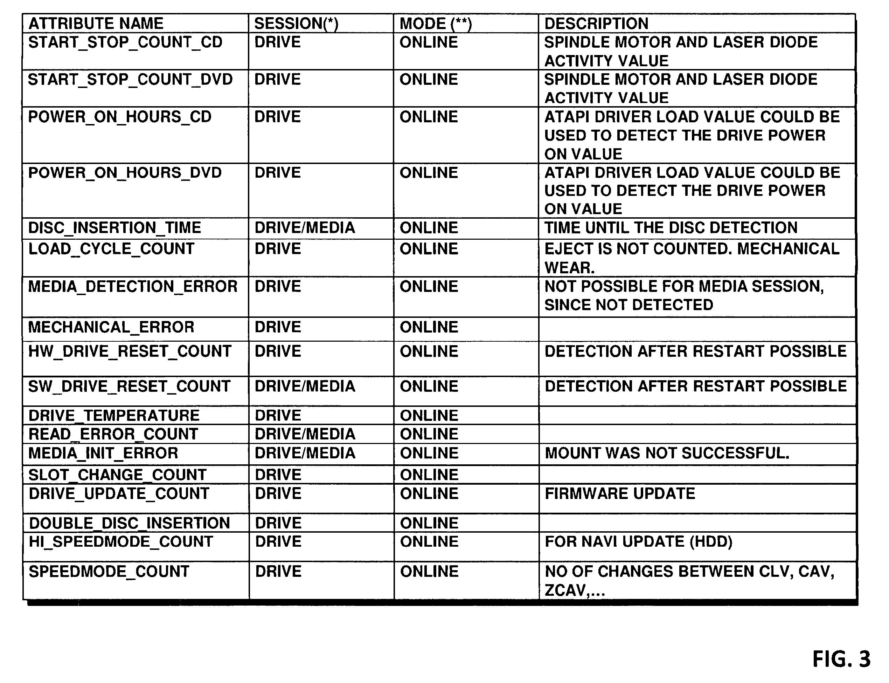

An example of such a media table is shown in Fig. 3. The media session table may be located in a persistent memory area of the system. The size and the information structure of the table are fixed. The monitoring unit 111 stores each raw value of each attribute once per session. As shown in Fig. 3 the monitoring unit counts the number of starts and stops of the laser diode for a CD, a DVD, counts the number of power on hours, the number of load cycles, etc. Other parameters supervised are, by way of example, the number of mechanical errors, hardware or software drive resets, or the drive temperature. When it is detected that the media is ejected from the drive, the acquired data in the media session table are transferred to a media table 122 of said session. The media session table will be cleared when a new media is inserted into the drive so that for the newly arrived media the media session table can be again filled with data. When this second media is then ejected, a new media table for said second session 122 is then generated. Thus, for each media session a media table will be generated leading to a plurality of media tables as symbolized by the different tables 122 shown in Fig. 1.

The data collected in the media session table are additionally transferred to the drive session table 123 where the data are collected over the lifetime of the drive 100 before it is replaced by another drive. Thus, in the drive session table the data of the media session table are accumulated over the lifetime of the drive in order to be able to determine the overall wear of the drive, such as the number of power on hours, the number of drive resets. Thus, the table shown in Fig. 3 is generated for each media session and is generated for the drive session.

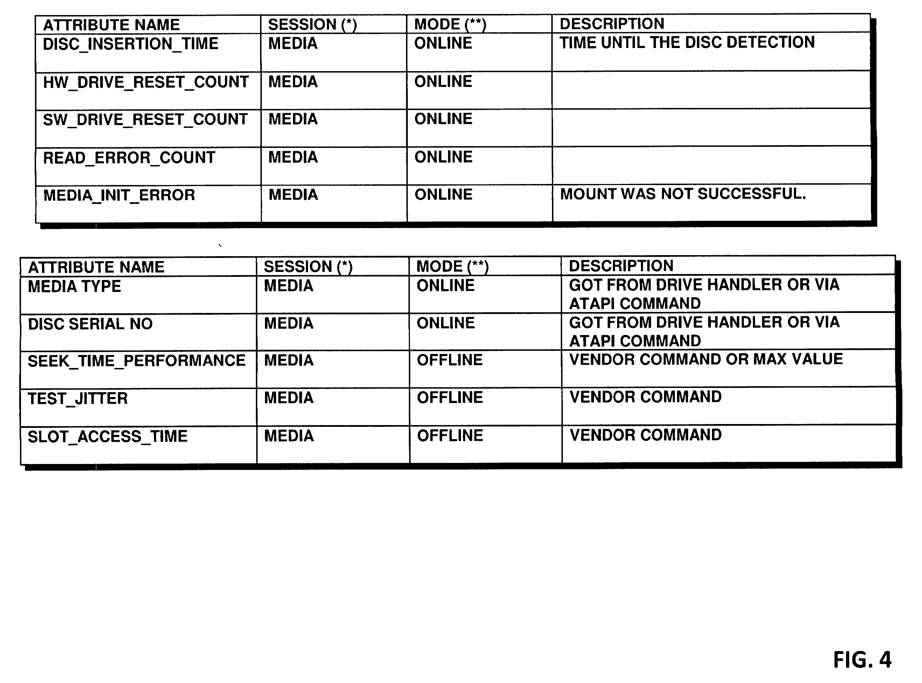

One exemplary embodiment of one of the media tables is shown in Fig. 4. The upper table shown in Fig. 4 contains data copied from the media session table. The data shown in the lower part of Fig. 4 are data of the media table obtained by special ATAPI commands.

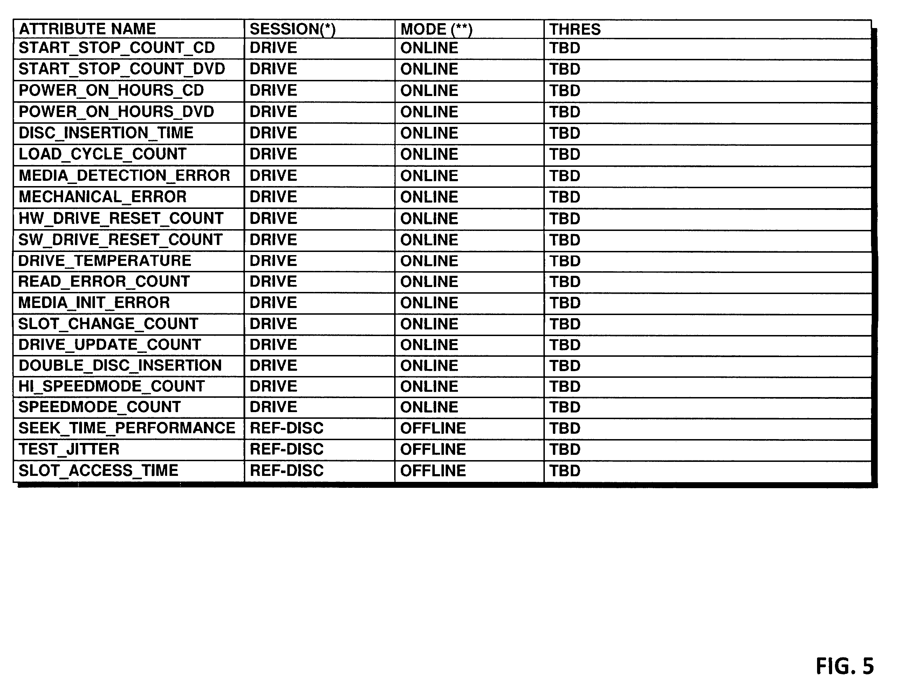

The system furthermore comprises a drive threshold table 124 as shown in Fig. 5. This drive threshold table stores the lifetime limit raw values that will be used by the processing unit 130 for a comparison to the information provided by the drive session table 123. The processing unit 130 furthermore uses the different media tables in order to determine whether, in case an inserted media cannot be read, the error is due to the inserted media itself, or due to the age of the drive 100. By using the media tables 122 and the drive session table and by comparing the information provided in the drive session table and in the media tables to the information provided in the drive threshold table, it is additionally possible to separate errors of a single unreadable medium from drive lifetime parameters.

The processing unit 130 transfers the data provided in the media session table with an eject event to a media table for said session and compares the drive session table with the threshold values stored in the drive threshold table.

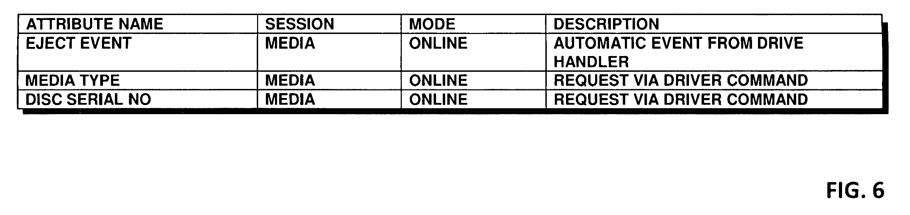

In the system shown in Fig. 1 a drive handler 140 is provided, the drive handler 140 informing the processing unit of the events of the drive 100. Thus, the drive handler 140 may inform the processing unit 130 that a disc is inserted or ejected from the drive. In Fig. 6 a table of the information provided by the drive handler is shown. Furthermore, an interface 150 providing the information to the user as shown in Fig. 1.

The monitoring unit monitors all accesses to the media and the media drive. It writes the corresponding values shown in Figs. 3 and 4 into the corresponding tables. These tables are valid until the media or the media drive is changed. In the case of a media change or media drive exchange the data from the media session table are copied into the persistent memory. For determining the drive fitness the monitoring unit then retrieves the values from the drive session table or media tables to determine the drive fitness.

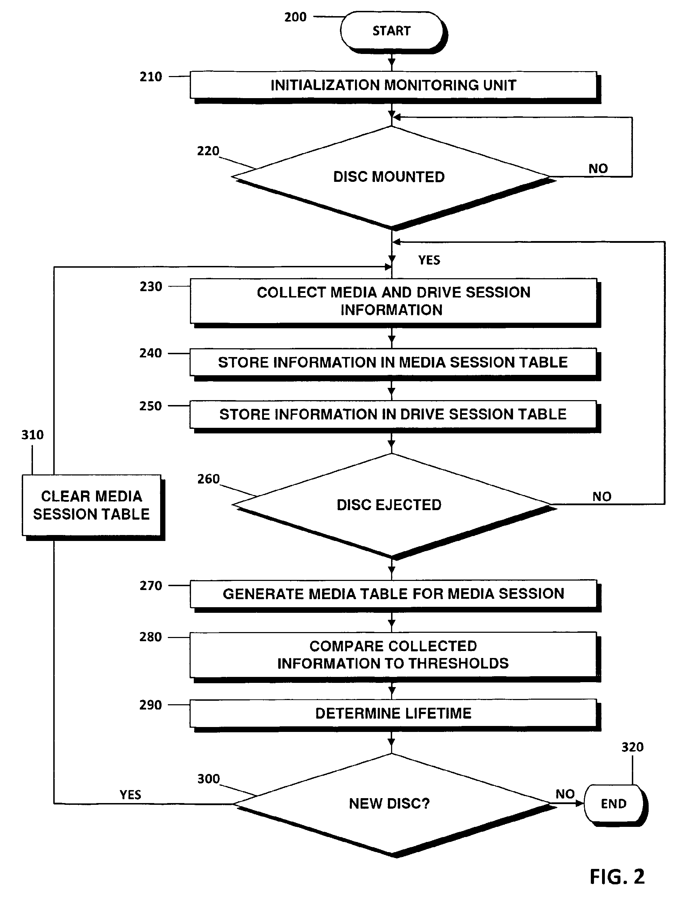

In Fig. 2 the steps carried out by the system shown in Fig. 1 are summarized. After start in step 200 an initialization step of the monitoring unit is carried out in which the monitoring unit updates the media session table 121 and the drive session table in accordance with the media drive access. In step 220 it is asked whether a disc is inserted into the media drive. If a disc/media is detected in the media drive, the information of the media session is collected in step 230 and stored in the media session table in step 240. Additionally, in step 250 the information is stored in the drive session table where the information about an access to the media and media drive is collected over the lifetime of the drive. In step 260 it is asked whether the media session has ended by determining whether the media has been ejected. As long as the media is inside the drive the information is collected and stored in the corresponding tables. If the media session has ended with a disc ejection a media table for said session is generated in step 270. In step 280 the information in the drive session table and media tables are compared to the drive threshold table to determine the drive fitness. Inter alia it is possible to determine the remaining lifetime of the drive as indicated in step 290. In step 300 it is asked whether a new disc is detected in the media drive. If this is the case, the media session table is cleared allowing the collection of new data for the new media session (step 310). If no new disc is detected the method ends in step 320.

This method shown in Fig. 2 is used over the lifetime of the media drive. If a new media drive is installed in the system, this has to be detected and the drive session table 123 has to be cleared so that a new drive session can start after the detection of a new drive.

## Claims

1. A diagnosis system for a removable media drive (100), the system comprising:
- a monitoring unit (111) collecting information about an access to the media drive (100) and an access to a removable media contained in the media drive,
- a storage unit (120) containing a threshold table with at least one threshold value for the access to the media drive, and
- a processing unit (130) configured to compare the collected information of the monitoring unit (111) to said at least one threshold value contained in the threshold table and configured to determine a diagnosis information for the removable media drive in accordance with said comparison.

2. The diagnosis system according to claim 1, wherein the monitoring unit (111) is configured to collect media session related information in a media table (122), a media session starting with an insertion of the removable media into the media drive (100) and ending when said removable media is ejected from the media drive (100), and is configured to collect drive session related information in a drive session table (123) separately from the media session related information, the drive session related information being collected until the removable media drive is exchanged.

3. The diagnosis system according to claim 2 wherein the monitoring unit (111) is configured to generate a media table (122) for each removable media inserted into the media drive.

4. The diagnosis system according to claim 2 or 3, wherein the monitoring unit (111) is configured to collect a media serial number and to store the media serial number together with the media table (122) of said media session.

5. The diagnosis system according to of claims 2 to 4, wherein the monitoring unit (111) is configured to first collect the media session related information in a media session table (121), the processing unit (130) being configured to transfer the data contained in the media session table (121) to the media table (122) of said session, when the removable media is ejected from the media drive (100), and to clear the media session table at the latest when a new media is inserted into the removable media drive.

6. The diagnosis system according to any of the preceding claims wherein the processing unit (130) is configured to determine a remaining lifetime of the removable media drive in accordance with the comparison.

7. The diagnosis system according to any of claims 2 to 6, wherein the processing unit (130) determines the remaining lifetime by comparing data from the drive session table (123) to the threshold values contained in the threshold table (124) and taking into account an evolution of the readability of the removable media in the media drive deduced from the different media tables.

8. The diagnosis system according to any of claims 2 to 7, wherein the processing unit (130) is configured to generate the media tables for each removable media session in a persistent area of the storage unit (120).

9. The diagnosis system according to any of the preceding claims further comprising a drive handler detecting an eject event of the removable media and transmitting the eject event to the processing unit.

10. A method for generating a diagnosis information for a removable media drive (100), the method comprising the steps of:
- collecting information about an access to the media drive and an access to a removable media contained in the media drive,
- providing a threshold table (124) with at least one threshold value for the access to the media drive (100), and
- comparing the collected information about an access to the media drive (100) and an access to a removable media contained in the media drive to said at least one threshold value contained in the threshold table and determining a diagnosis information for the removable media drive in accordance with said comparison.

11. The method according to claim 10, wherein media session related information is collected in a media table (122), a media session starting with an insertion of the removable media into the media drive and ending when said removable media is ejected from the media drive, and drive session related information is collected in a drive session table (123) separately from the media session related information, the drive session related information collecting being collected until the removable media drive is exchanged.

12. The method according to claim 10 or 11, wherein a media table is generated for each removable media inserted into the media drive.

13. The method according to claim 11 or 12, wherein the media session related information is first collected in a media session table (121), the data contained in the media session table (121) being transferred to the media table (122) of said media session when the removable media is ejected from the media drive (100), the media session table being cleared when it is detected that a new media is inserted into the removable media drive.

14. The method according to any of claims 111 to 13, wherein the diagnosis information is determined by comparing data from the different media tables (122) and the drive session table (123) to the threshold values contained in the threshold table (124).

15. The method according to any of claims 10 to 14, wherein the remaining lifetime of the removable media drive is determined as the diagnosis information.

16. The method according to any of claims 10 to 15, wherein the collecting of information comprises at least one of the following steps: counting the number of starts or stops of a media reader used in the media drive for reading the removable media, counting the number of working hours, determining the number of drive resets, determining the number of read errors, determining the drive temperature, determining the number of media insertions in the removable media drive.
